# EUROPÄISCHE PATENTSCHRIFT

(11) **EP 0 557 702 B1**
(45) Veröffentlichungstag und Bekanntmachung des Hinweises auf die Patenterteilung: **16.07.1997**
(21) Anmeldenummer: 93100624.1
(22) Anmeldetag: 16.01.1993
(51) Int. Cl.: A01D 45/02, A01D 61/00

(54) **Querförderschnecke für einen Mäh- oder Maiserntevorsatz**
Transversal screw conveyor for a mowing or maize-harvesting attachment
Hélice transporteuse transversale pour un dispositif de fauchage ou de récolte de mais

(30) Priorität: 28.02.1992 DE 4206209
(43) Veröffentlichungstag der Anmeldung: 01.09.1993
(73) Patentinhaber: CLAAS SAULGAU GMBH, D-88340 Saulgau (DE)
(72) Erfinder: Arnold, Rudolf, W-7968 Saulgau (DE); Gebele, Josef, W-7961 Hosskirch 2 (DE)

(56) Entgegenhaltungen:
- DE-A- 3 804 598
- FR-A- 2 412 250
- US-A- 2 426 922
- DATABASE WPI Section PQ, Week 7947, 9. Dezember 1980 Derwent Publications Ltd., London, GB; Class P12, AN K9823B/47 & SU-A-650 543 (VOLODKIN) 9. März 1979

## Beschreibung

Die Erfindung bezieht sich auf eine Querförderschnecke für einen Mäh- oder Maiserntevorsatz nach den Merkmalen des Oberbegriffes des Anspruches 1. Eine diese Merkmale aufweisende Querförderschnecke ist aus der SU-A-650 543 bekannt.

Bei einer vorbekannten Ausführung nach der DE-OS 38 04 598 haben Endscheiben an den Schneckengängen die Aufgabe, die zu fördernden Stengel anders als bei Ausführungen nach beispielsweise den Patentschriften FR-PS 24 12 250 oder SU-A-650 543 möglichst lange festzuhalten, um so ihr Auffächern zu verhindern. Bei sehr dickstengeligem Erntegut führen senkrecht zur Achse der Querförderschnecke stehende Endscheiben aber zu Stauungen im Gutfluß und damit verbunden zu erheblichen Schwankungen des Antriebsdrehmomentes.

Diese Ungleichförmigkeiten zu vermeiden, ist eine Hauptaufgabe der Erfindung.

Die Lösung der Aufgabe wird darin gesehen, daß die Endscheiben nicht senkrecht zur Achse der Querförderschnecke, sondern in einem Winkel < 90° zur Achse des Mittelrohres stehen und an ihrem Umfang wellenförmig oder ähnlich eingebuchtet ausgestaltet sind. Letzteres hat den Vorteile, daß die Stengelenden sich in den Einbuchtungen zur Mitte der Querförderschnecke verschieben können und dennoch am Auffächern gehindert werden. Nach einem weiteren Merkmal der Erfindung ist es zweckmässig, die Endscheiben eben auszubilden.

Anhand zweier Abbildungen wird die Erfindung beispielsweise erläutert.

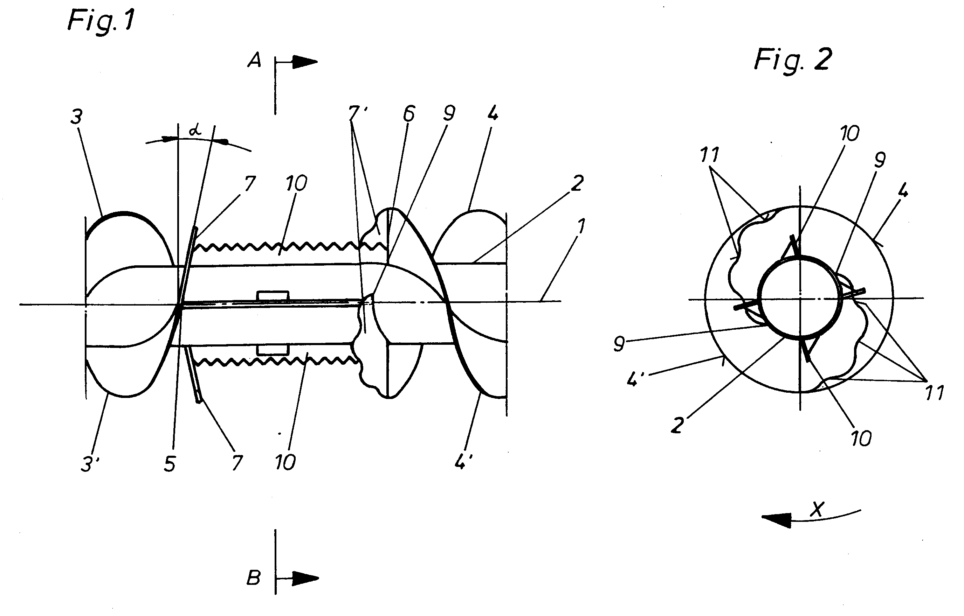

Figur 1 zeigt eine Querförderschnecke von oben,
Figur 2 zeigt den gleichen Gegenstand als Schnitt A - B

Eine Querförderschnecke mit einer Achse (1) hat ein Mittelrohr (2). Von ihren jeweiligen äußeren Enden führen linksgängige Schneckengänge (3, 3') und rechtsgängige Schneckengänge (4, 4') nach innen.

Die Schneckengänge (3, 3', 4, 4') endigen mit etwa senkrecht auf dem Mittelrohr (2) stehenden Kanten (5, 6).

Mit den Kanten (5, 6) der Schneckengänge (3, 3', 4, 4') fest verbunden sind Endscheiben (7, 7'), die unter einem Winkel (α) etwa senkrecht zu der Achse (1) auf dem Mittelrohr (2) aufsitzen. Die Endscheiben (7, 7') nähern sich mit ihrem Umfang, der wellenförmige Einbuchtungen (11) besitzt, dem Mittelrohr (2) und sitzen mit ihrem freien Ende an der Stelle (9) auf dem Mittelrohr (2) auf.

Zwischen den Endscheiben (7, 7') befinden sich etwa radial gestellte Förderplatten (10), die fest mit dem Mittelrohr (2) und den Endscheiben (7, 7') verbunden sind.

Die Querförderschnecke ist mit ihrer Achse (1) drehbar und in Richtung des Pfeiles (x) antreibbar in einer nicht dargestellten Wanne gelagert, die die Querförderschnecke teilweise umschließt. Wenn das Erntegut in den Spalt zwischen dem Umfang der Schneckengänge (3, 3', 4, 4') und der Wanne gelangt, wird es durch Formschluß und Reibung in Richtung zur Mitte der Förderschnecke hin gefördert. Im Bereich der Endscheiben (7, 7') wird die Querbewegung der Stengelenden verringert und diese durch die wellenförmigen Einbuchtungen (11) in Richtung auf den späteren Gutfluß so umgelenkt, daß die Stengel von den radial gestellten Förderplatten (10) erfaßt und in den nicht dargestellten Längsförderer eingeführt werden können.

## Patentansprüche

1. Querförderschnecke für einen Mäh- oder Maiserntevorsatz mit einem Mittelrohr und gegenläufigen Schneckengängen, die im Abstand voneinander endigen und dort in Endscheiben übergehen und mit zwischen den Endscheiben etwa radial angeordneten Fördermitteln, wobei die Endscheiben eine zu den Scheckengängen gleichgerichtete, aber kleinere Steigung als diese haben, dadurch gekennzeichnet, daß die Endscheiben (7, 7') an ihrem Umfang wellenförmig oder ähnlich eingebuchtet gestaltet sind und mit einem Winkel < 90° zur Achse (1) des Mittelrohres (2) stehen.

2. Querförderschnecke nach Anspruch 1, dadurch gekennzeichnet, daß die Endscheiben (7, 7') eben sind.

## Claims

1. A transverse conveyor screw for a front mowing or corn harvesting attachment having a central tube and oppositely directed screw flights which terminate at a spacing from each other and there go into end plates, and with conveyor means arranged substantially radially between the end plates, wherein the end plates have a pitch which is in the same direction in relation to the screw flights but smaller than same, characterised in that at their periphery the end plates (7, 7') are of a wave-shaped or similarly recessed configuration and are disposed at an angle < 90° relative to the axis (1) of the central tube.

2. A transverse conveyor screw according to claim 1 characterised in that the end plates (7, 7') are flat.

## Revendications

1. Vis convoyeuse transversale pour un outil rapporté de fauchage ou de récolte du maïs, comportant un tube central et des filets de vis tournant en des sens opposés, qui se terminent à distance l'un de l'autre et, en cet endroit, se prolongent par des disques d'extrémité, et comportant des moyens d'entraînement, qui sont disposés approximativement radialement entre les disques d'extrémité, les disques d'extrémité possédant une inclinaison dans le même sens que les filets de vis, mais inférieure à l'inclinaison de ces derniers, caractérisée en ce que les disques d'extrémité (7,7') sont agencés avec une forme ondulée ou dentelée de façon similaire au niveau de leur périphérie, et font un angle < 90° par rapport à l'axe (1) du tube central (2).

2. Vis convoyeuse transversale selon la revendication 1 caractérisée en ce que les disques d'extrémité (7,7') sont plats.
